# FASCICULE DE BREVET EUROPEEN

(11) **EP 2 936 294 B1**
(45) Date de publication et mention de la délivrance du brevet: **09.01.2019**
(21) Numéro de dépôt: 13802572.1
(22) Date de dépôt: 04.12.2013
(51) Int. Cl.: G06F 3/0488, G06F 3/01, G08G 5/00

(54) **TERMINAL DE CONTROLE DE TRAFIC NOTAMMENT AERIEN**
ENDGERÄT ZUR VERKEHRSÜBERWACHUNG, INSBESONDERE DES LUFTVERKEHRS
TERMINAL FOR MONITORING TRAFFIC, PARTICULARLY AIR TRAFFIC

(30) Priorité: 18.12.2012 FR 1203454
(43) Date de publication de la demande: 28.10.2015
(73) Titulaire: THALES, 92200 Neuilly-sur-Seine (FR)
(72) Inventeur: PINHEIRO, Jean-Philippe, F-94628 Rungis Cedex (FR)
(74) Mandataire: Lavoix
(86) Numéro de dépôt international: PCT/EP2013/075464
(87) Numéro de publication internationale: WO 2014/095363

(56) Documents cités:
- WO-A2-2007/072015
- FR-A1- 2 923 008
- JAYSON TURNER ET AL: "Combining gaze with manual interaction to extend physical reach.", 1ST INTERNATIONAL WORKSHOP ON PERVASIVE EYE TRACKING & MOBILE EYE-BASED INTERACTION, PETMEI '11, 18 septembre 2011 (2011-09-18), pages 33-36, XP055057128, Beijing, China
- Sophie Stellmach ET AL: "Look & Touch: Gaze-supported Target Acquisition", Proceedings of the 2012 ACM annual conference on Human Factors in Computing Systems, CHI '12, 5 mai 2012 (2012-05-05), pages 2981-2990, XP055087016, New York, New York, USA DOI: 10.1145/2207676.2208709 ISBN: 978-1-45-031015-4 Extrait de l'Internet: URL:http://delivery.acm.org/10.1145/221000 0/2208709/p2981-stellmach.pdf [extrait le 2013-11-06]

## Description

La présente invention concerne un terminal d'opérateur de contrôle de trafic aérien.

Plus particulièrement, l'invention se rapporte à un tel terminal qui comporte des moyens d'affichage d'informations de trafic aérien et des moyens formant interface homme/machine mis à la disposition de l'opérateur notamment pour gérer le trafic et le fonctionnement du terminal.

Dans l'état de la technique, les moyens formant interface homme/machine comprennent généralement un pointeur tel que par exemple une souris ou une boule de pointage/sélection, associée à un clavier et qui sont donc manipulables par cet opérateur de contrôle.

On pourra par exemple se reporter aux documents FR A 2 923 008 et WO A 2007072015 pour trouver des exemples de réalisation de tels terminaux. En particulier, FR A 2 923 008 décrit un terminal d'opérateur de prévision de trafic aérien, du type comportant des moyens d'affichage d'informations de trafic aérien et des moyens formant interface homme/machine mis à la disposition de l'opérateur, adapté pour afficher la distance de séparation de deux aéronefs, établies à partir de leurs plans de vol ou de données radar, et, si l'opérateur sélectionne ce premier aéronef, afficher la position future des aéronefs le long de leurs plans de vol en réponse à une entrée de données de l'opérateur.

Cependant, ces terminaux présentent un certain nombre d'inconvénients notamment au niveau du nombre d'interactions nécessaire pour assurer ce contrôle/commande.

Par ailleurs, la manipulation des moyens mis à la disposition des opérateurs peut être relativement délicate en milieu difficile comme par exemple lorsque ce terminal est embarqué à bord d'un porteur mobile tel qu'un aéronef.

Des mouvements de ce porteur peuvent en effet gêner la manipulation de ce type de dispositif de saisie.

Le but de l'invention est donc de résoudre ces problèmes.

A cet effet, l'invention a pour objet un terminal d'opérateur de contrôle de trafic aérien, du type comportant des moyens d'affichage d'informations de trafic aérien et des moyens formant interface homme/machine mis à la disposition de l'opérateur notamment pour gérer le trafic et le fonctionnement du terminal, caractérisé en ce que les moyens formant interface homme/machine comportent en outre des moyens à surface tactile et un occulomètre de détection de la position des yeux de l'opérateur aérien et en ce qu'il est adapté pour afficher la distance minimale de séparation de deux aéronefs au moins lors de leur croisement, établies à partir de leurs plans de vol ou de données radar, si l'opérateur regarde le premier aéronef, pose un doigt sur les moyens à surface tactile, pour sélectionner ce premier aéronef, regarde le deuxième aéronef, pose un autre doigt sur les moyens à surface tactile, pour sélectionner ce deuxième aéronef, afficher la position future des aéronefs si l'opérateur fait glisser ses doigts sur les moyens à surface tactile, et pour créer un évènement de conflit dans un agenda lorsque l'opérateur retire ses doigts des moyens à surface tactile.

Selon d'autres caractéristiques du terminal suivant l'invention, prises seule ou en combinaison :
- les moyens à surface tactile comportent une tablette tactile ;
- les moyens à surface tactile comportent un pavé tactile ;
- il comporte des moyens pour détecter que l'opérateur regarde un aéronef, pose un doigt sur les moyens à surface tactile et fait glisser celui-ci dans un sens ou dans l'autre, pour valider des instructions de montée ou de descente de l'aéronef vers le niveau de sortie du secteur aérien surveillé.

L'invention sera mieux comprise à l'aide de la description qui va suivre, donnée uniquement à titre d'exemple et faite en se référant aux dessins annexés, sur lesquels :

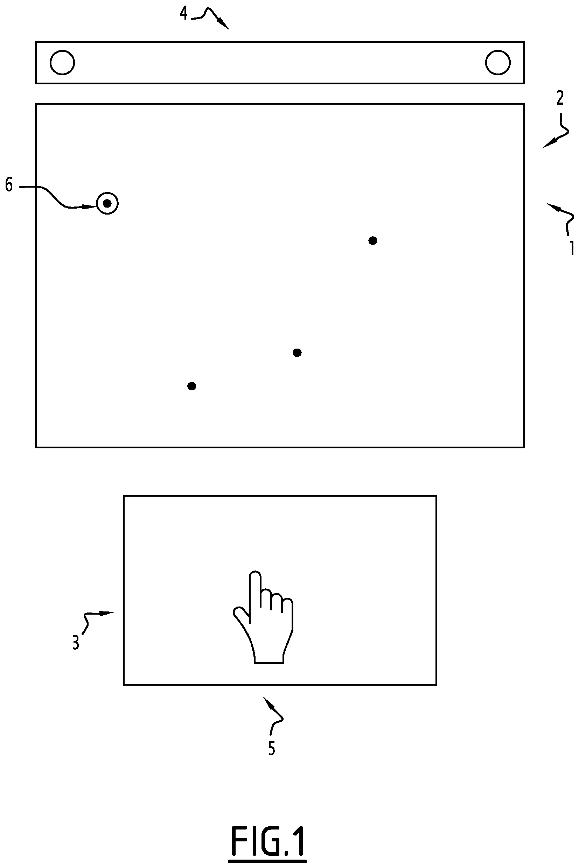

- les figures 1 à 6 illustrent la structure et le fonctionnement d'un exemple de réalisation d'un terminal d'opérateur selon l'invention.

Comme cela a été indiqué précédemment, la présente invention se rapporte à un terminal d'opérateur de contrôle de trafic aérien qui est désigné par la référence générale 1 sur ces figures.

Ce terminal comporte de façon classique des moyens d'affichage d'informations de trafic aérien désignés la référence générale 2, comportant tout moniteur approprié et associés à des moyens formant interface homme/machine désignés par la référence générale 3.

Cet ensemble de moyens est mis à la disposition de l'opérateur notamment pour gérer le trafic et le fonctionnement du terminal.

Comme cela est illustré, les moyens formant interface homme/machine désignés par la référence générale 3, comportent des moyens formant occulomètre, désignés par la référence générale 4, de détection de la position des yeux de l'opérateur donc de l'axe de vision ou de vue de celui-ci pour localiser l'endroit des moyens d'affichage où il regarde et des moyens à surface tactile désignés par la référence générale 5.

Ainsi par exemple ces moyens à surface tactile peuvent comporter une tablette tactile ou encore un pavé tactile...

Ces différents moyens permettent alors comme cela est illustré sur ces figures, à l'opérateur de regarder les moyens d'affichage et notamment l'un des aéronefs affichés sur ceux-ci, tel que par exemple l'aéronef désigné par la référence générale 6 sur cette figure 1, et de le sélectionner en appuyant sur les moyens à surface tactile avec un doigt comme cela est illustré, par exemple.

Une indication par exemple visuelle permet de savoir quel aéronef est désigné par l'opérateur par exemple lorsque celui-ci regarde cet aéronef et si celui-ci est sélectionné ou non, par exemple par une action sur la surface tactile.

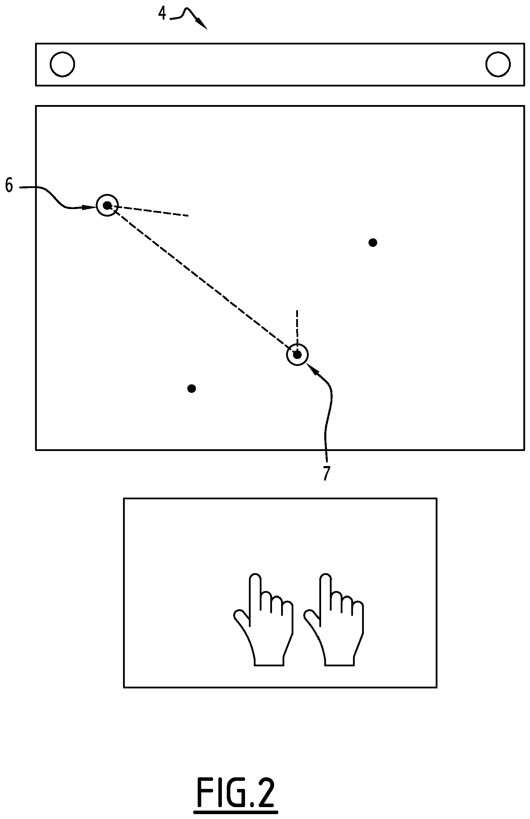

Si, comme cela est illustré sur la figure 2, une fois ce premier aéronef sélectionné, l'opérateur regarde un autre aéronef, tel que par exemple l'aéronef désigné par la référence générale 7 sur cette figure 2, et appuie avec un autre doigt sur la surface tactile, alors les moyens d'affichage sous le contrôle du reste de la chaîne de gestion du trafic, sont adaptés pour afficher la distance minimale de séparation des deux aéronefs lors de leur croisement et leur route, établis à partir de leur plan de vol par exemple.

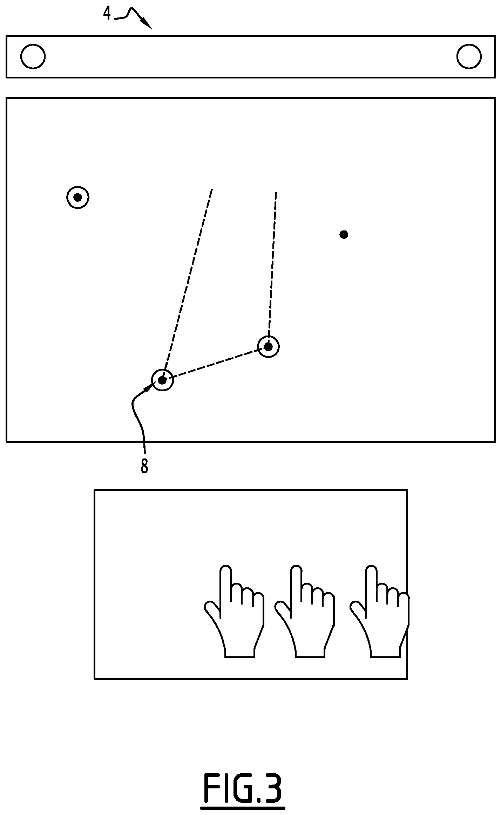

Bien entendu un nombre différent d'aéronefs peut ainsi être groupé comme cela est illustré sur la figure 3, dans laquelle on voit que l'opérateur a sélectionné un troisième aéronef désigné par la référence générale 8 en appuyant un troisième doigt sur la surface tactile.

On conçoit alors de façon générale, qu'à chaque fois que l'opérateur regarde un aéronef et pose un doigt sur les moyens à surface tactile, l'aéronef correspondant est sélectionné et que dès qu'il regarde un autre aéronef, les moyens d'affichage affichent, sous le contrôle et la commande du reste de la chaîne de gestion du trafic aérien, la distance minimale de séparation entre le dernier aéronef sélectionné et le dernier aéronef regardé par l'opérateur.

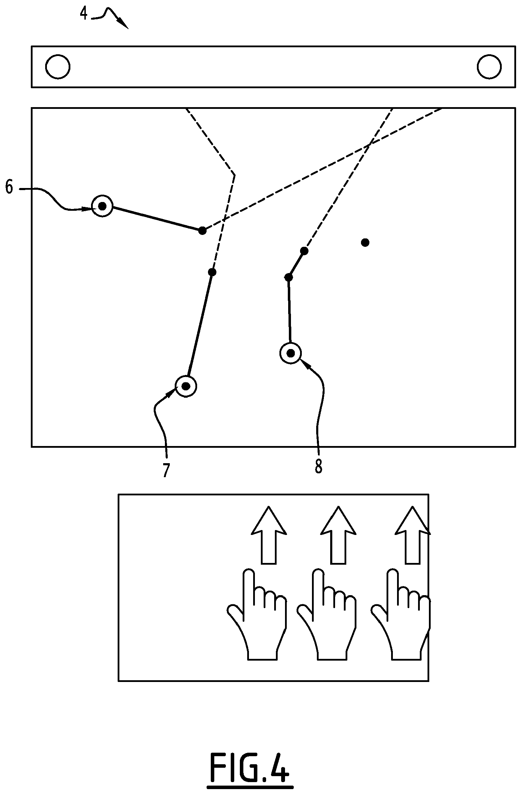

Comme cela est illustré en particulier sur la figure 4, si l'opérateur fait glisser ses doigts posés sur les moyens à surface tactile, les moyens d'affichage affichent alors la position future des aéronefs telle que déterminée à partir de leur plan de vol par le reste de la chaîne de gestion du trafic.

Des données radar peuvent également être utilisées.

Ceci permet par exemple de déterminer et de faire ressortir que les plans de vol et les routes correspondantes des aéronefs 6 et 7 entrent potentiellement en conflit à un moment du vol.

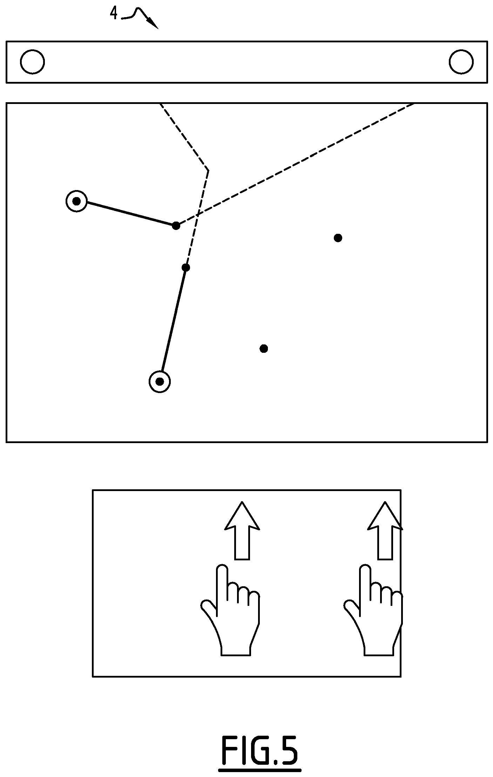

L'opérateur peut alors retirer le doigt correspondant à la sélection de l'aéronef 8 des moyens à surface tactile pour ne retenir la sélection que des aéronefs 6 et 7, dont les routes ou les plans de vol montrent qu'ils peuvent entrer en conflit comme cela est illustré sur la figure 5.

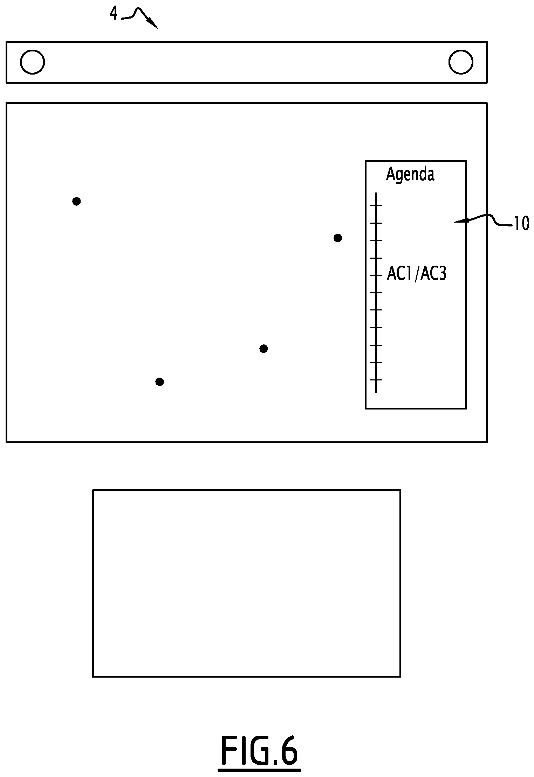

Ceci permet alors lorsque l'opérateur retire ensuite ses doigts des moyens à surface tactile comme cela est illustré sur la figure 6, de créer un événement de conflit dans un agenda 10 de façon classique en la matière.

Dans l'état de la technique, de tels agendas sont en effet créés pour faire ressortir ce type de conflits potentiels.

Par ailleurs, il est également à noter que ce terminal peut comporter des moyens pour détecter que l'opérateur regarde un aéronef, pose un doigt sur les moyens à surface tactile et fait glisser celui-ci dans un sens ou un autre, pour valider des instructions de montée ou de descente de l'aéronef par exemple, vers un niveau de sortie du secteur aérien surveillé.

Bien entendu d'autres modes de réalisation encore peuvent être envisagés.

## Revendications

1. Terminal d'opérateur de contrôle de trafic aérien, du type comportant des moyens d'affichage d'informations de trafic aérien (2) et des moyens formant interface homme/machine (3) mis à la disposition de l'opérateur notamment pour gérer le trafic et le fonctionnement du terminal, les moyens formant interface homme/machine comportant en outre des moyens à surface tactile (5) et un oculomètre (4) de détection de la position des yeux de l'opérateur aérien, le terminal étant adapté pour afficher la distance minimale de séparation de deux aéronefs au moins lors de leur croisement, établies à partir de leurs plans de vol ou de données radar, si l'opérateur regarde le premier aéronef, pose un doigt sur les moyens à surface tactile, pour sélectionner ce premier aéronef, regarde le deuxième aéronef, pose un autre doigt sur les moyens à surface tactile, pour sélectionner ce deuxième aéronef, afficher la position future des aéronefs (6, 7, 8) si l'opérateur fait glisser ses doigts sur les moyens à surface tactile, et pour créer un évènement de conflit dans un agenda (10) lorsque l'opérateur retire ses doigts des moyens à surface tactile.

2. Terminal selon la revendication 1, **caractérisé en ce que** les moyens à surface tactile comportent une tablette tactile (3).

3. Terminal selon la revendication 1, **caractérisé en ce que** les moyens à surface tactile comportent un pavé tactile.

4. Terminal selon l'une quelconque des revendications précédentes, **caractérisé en ce qu'**il comporte des moyens pour détecter que l'opérateur regarde un aéronef, pose un doigt sur les moyens à surface tactile (3) et fait glisser celui-ci dans un sens ou dans l'autre, pour valider des instructions de montée ou de descente de l'aéronef vers le niveau de sortie du secteur aérien surveillé.

## Patentansprüche

1. Endeinrichtung eines Bedieners zur Kontrolle des Luftverkehrs von der Art, welche Mittel zur Anzeige von Luftverkehrsinformationen (2) und Mensch/Maschine-Schnittstelle-Mittel (3), welche dem Bediener insbesondere dazu zur Verfügung gestellt sind, den Verkehr und den Betrieb der Endeinrichtung zu verwalten, aufweist, wobei die Mensch/Maschine-Schnittstelle-Mittel ferner Mittel mit berührungsempfindlicher Oberfläche (5) und ein Okulometer (4) zur Erfassung der Position der Augen des Flug-Bedieners aufweisen, wobei die Endeinrichtung ferner dazu eingerichtet ist, die minimale Distanz der Entfernung von zwei Flugzeugen zumindest bei deren Kreuzung, was ausgehend von deren Flugplänen oder den Radardaten ermittelt wird, anzuzeigen, falls der Bediener das erste Flugzeug ansieht, einen Finger zur Auswahl dieses ersten Flugzeugs auf die Mittel mit berührungsempfindlicher Oberfläche legt, das zweite Flugzeug ansieht, einen anderen Finger zur Auswahl dieses zweiten Flugzeugs auf die Mittel mit berührungsempfindlicher Oberfläche legt, die zukünftige Position der Flugzeuge (6, 7, 8) anzuzeigen, falls der Bediener seine Fingern auf den Mitteln mit berührungsempfindlicher Oberfläche gleiten lässt, und zum Erzeugen eines Ereignisses eines Konflikts in einer Agenda (10), wenn der Bediener seine Finger von den Mitteln mit berührungsempfindlicher Oberfläche wegnimmt.

2. Endeinrichtung gemäß dem Anspruch 1, **gekennzeichnet dadurch, dass** die Mittel mit berührungsempfindlicher Oberfläche ein berührungsempfindliches Tablet (3) aufweisen.

3. Endeinrichtung gemäß dem Anspruch 1, **gekennzeichnet dadurch, dass** die Mittel mit berührungsempfindlicher Oberfläche ein Tastfeld aufweisen.

4. Endeinrichtung gemäß irgendeinem der vorhergehenden Ansprüche, **dadurch gekennzeichnet, dass** sie aufweist Mittel zum Erfassen, dass der Bediener ein Flugzeug ansieht, einen Finger auf die Mittel mit berührungsempfindlicher Oberfläche (3) legt und diesen in eine Richtung oder in die andere gleiten lässt, um die Befehle zum Steigflug oder zum Sinkflug des Flugzeugs auf das Niveau des Verlassens des überwachten Luftsektors zu bestätigen.

## Claims

1. Air traffic control operator terminal, of the type comprising air traffic information display means (2) and means forming a man/machine interface (3) provided to the operator especially for managing the traffic and the operation of the terminal, the means forming a man/machine interface further comprising means having a touch-sensitive surface (5), and an oculometer (4) for detecting the position of the eyes of the air traffic operator, the terminal being adapted to display the minimum separation distance of two aircraft at least when they cross, established on the basis of their flight plans or of radar data, if the operator looks at the first aircraft, places a finger on the means having a touch-sensitive surface in order to select that first aircraft, looks at the second aircraft, places another finger on the means having a touch-sensitive surface in order to select that second aircraft, to display the future position of the aircrafts (6, 7, 8) if the operator slides his fingers on the means having a touch-sensitive surface, and to create a conflict event in a log (10) when the operator removes his fingers from the means having a touch-sensitive surface.

2. Terminal according to claim 1, **characterised in that** the means having a touch-sensitive surface comprise a touch-sensitive tablet (3).

3. Terminal according to claim 1, **characterised in that** the means having a touch-sensitive surface comprise a touchpad.

4. Terminal according to any one of the preceding claims, **characterised in that** it comprises means for detecting that the operator is looking at an aircraft, places a finger on the means having a touch-sensitive surface (3) and slides it in one direction or the other, in order to validate instructions for the climb or descent of the aircraft to the level at which it leaves the monitored airspace sector.
